# EUROPÄISCHE PATENTSCHRIFT

(11) **EP 1 407 231 B1**
(45) Veröffentlichungstag und Bekanntmachung des Hinweises auf die Patenterteilung: **21.12.2011**
(21) Anmeldenummer: 02764630.6
(22) Anmeldetag: 05.07.2002
(51) Int. Cl.: G01D 5/245, G01D 5/347, G01D 5/36

(54) **POSITIONSMESSEINRICHTUNG**
POSITION MEASURING DEVICE
DISPOSITIF DE MESURE DE POSITION

(30) Priorität: 09.07.2001 DE 10132521
(43) Veröffentlichungstag der Anmeldung: 14.04.2004
(73) Patentinhaber: Dr. Johannes Heidenhain GmbH, 83292 Traunreut (DE)
(72) Erfinder: GRUBER, Alexander, 83368 St. Georgen (DE); HERMANN, Michael, 83342 Tacherting (DE); HOLZAPFEL, Wolfgang, 83119 Obing (DE); KÜHLER, Markus, 83365 Nussdorf (DE); PRONOLD, Herbert, 83301 Traunreut (DE); TONDORF, Sebastian, 83329 Waging am See (DE)
(86) Internationale Anmeldenummer: PCT/EP2002/007453
(87) Internationale Veröffentlichungsnummer: WO 2003/006926

(56) Entgegenhaltungen:
- EP-A- 0 160 811
- EP-A- 0 498 904
- EP-A- 0 895 063

## Beschreibung

Die Erfindung betrifft eine Positionsmesseinrichtung nach dem Oberbegriff des Patentanspruchs 1.

Derartige Positionsmesseinrichtungen werden insbesondere bei Bearbeitungsmaschinen zur Messung der Relativlage eines Werkzeugs bezüglich eines zu bearbeitenden Werkstücks, bei Koordinatenmessmaschinen zur Ermittlung von Lage und Abmessungen von Prüfobjekten sowie in letzter Zeit vermehrt auch in der Halbleiterindustrie, beispielsweise in Wafersteppem eingesetzt. Dabei ist die Positionsmesseinrichtung eine Winkel- oder Längenmesseinrichtung, bei der der Maßstab an der Antriebseinheit (rotatorischer Motor oder Linearmotor) direkt angebaut wird, oder der Maßstab an einem durch die Antriebseinheit angetriebenen Bauteil angebaut wird.

Der Maßstab einer derartigen, beispielsweise aus der DE 92 09 801 U1 bekannten Positionsmesseinrichtung, weist eine periodische Messteilung zur Erzeugung von Zählsignalen sowie eine Referenzmarkierung zur Erzeugung eines Referenzmarkensignals auf. Über dieses Referenzmarkensignal wird für die Position der Referenzmarkierung ein Absolutbezug der Positionsmessung hergestellt werden, indem ein Zähler auf einen vorgegebenen Zählerstand gesetzt wird.

Zu Beginn einer Positionsmessung, nach Betriebsunterbrechung durch Ausfall der Versorgungsenergie sowie zur Korrektur und Kontrolle des Zählerstands ist es oft erforderlich, von einer beliebigen Position ausgehend die Referenzmarkierung anzufahren. Hierzu sind Bereichsmarkierungen auf dem Maßstab aufgebracht, durch die unterschieden werden kann, ob sich die Abtasteinrichtung auf der einen oder auf der anderen Seite der Referenzmarkierung befindet. Diese Bereichsmarkierung ist auf einer Seite der Referenzmarkierung als durchgehender lichtundurchlässiger Streifen ausgebildet. Auf der anderen Seite der Referenzmarkierung ist die Bereichsmarkierung als transparenter Bereich ausgeführt. Zur Abtastung beider Bereichsmarkierungen ist ein gemeinsamer Fotoempfänger in der Abtasteinrichtung angeordnet. Die Unterscheidung, ob sich die Abtasteinrichtung auf der einen oder der anderen Seite der Referenzmarkierung befindet, wird anhand eines Messsignals dieses Fotoempfängers getroffen. Offenbart ist auch, dass sich die Referenzmarkierung und die Bereichsmarkierungen in einer gemeinsamen Spur befinden können.

Eine ähnliche Positionsmesseinrichtung ist in der EP 0 895 063 A1 offenbart. Auch hier sind eine Referenzmarkierung und Bereichsmarkierungen in einer gemeinsamen Spur angeordnet. Am Übergangsbereich der Bereichsmsrkierungen ist ein Muster vorgesehen, um eine möglichst schnelle Änderung des Signalpegels des Abtastsignals zu erreichen.

Es hat sich gezeigt, dass eine derartige Unterscheidung von Bereichen anhand der Signalpegel dieses Messsignals problematisch ist, da der gegenseitige Abstand der Pegel relativ gering ist. Dieses Messsignal kann auch leicht durch partielle Verschmutzungen des Maßstabes beeinflusst werden, so dass eine fehlerhafte Stellung der Abtasteinrichtung detektiert wird.

Aufgabe der Erfindung ist es daher, eine Positionsmesseinrichtung anzugeben, bei der mehrere Messbereiche neben der Referenzmarkierung sicherer unterschieden werden können.

Diese Aufgabe wird durch eine Positionsmesseinrichtung mit den Merkmalen des Patentanspruchs 1 gelöst.

In der EP 0 498 904 A1 ist eine photoelektrische Positionsmesseinrichtung beschrieben, bei der Referenzmarkierungen jeweils mehrere Gitterfelder zugeordnet sind, aus denen ein Binärcode für die entsprechende Referenzmarkierung ableitbar ist. Die Gitterfelder können Bereiche neben der Referenzmarkierung nicht unterscheiden.

Vorteilhafte Ausgestaltungen unserer Erfindung sind in den abhängigen Patentansprüchen angegeben.

Die erfindungsgemäß ausgestaltete Positionsmesseinrichtung hat insbesondere den Vorteil, dass die Sicherheit zur eindeutigen Unterscheidung, ob sich die Abtasteinrichtung auf der einen oder der anderen Seite der Referenzmarkierung befindet, relativ hoch ist. Die Störsicherheit ist erhöht.

Mit Hilfe eines Ausführungsbeispiels wird die Erfindung nachstehend anhand der Zeichnungen näher erläutert.

Dabei zeigt
- Figur 1: eine schematische Schnittdarstellung einer Positionsmesseinrichtung,
- Figur 2: die Draufsicht auf den Maßstab der Positionsmesseinrichtung gemäß Figur 1,
- Figur 3: die Draufsicht auf die Fotoempfängeranordnung,
- Figur 4: die Draufsicht auf die Abtastplatte,
- Figur 5: den Abtaststrahlengang im Bereich der Referenzmarkierung,
- Figur 6: Referenzmarkensignale,
- Figur 7: den Abtaststrahlengang auf einer Seite der Referenzmarkierung,
- Figur 8: den Abtaststrahlengang auf der anderen Seite der Referenzmarkierung,
- Figur 9: eine Schaltungsanordnung,
- Figur 10: das Bereichssignal und
- Figur 11: das Limitsignal.

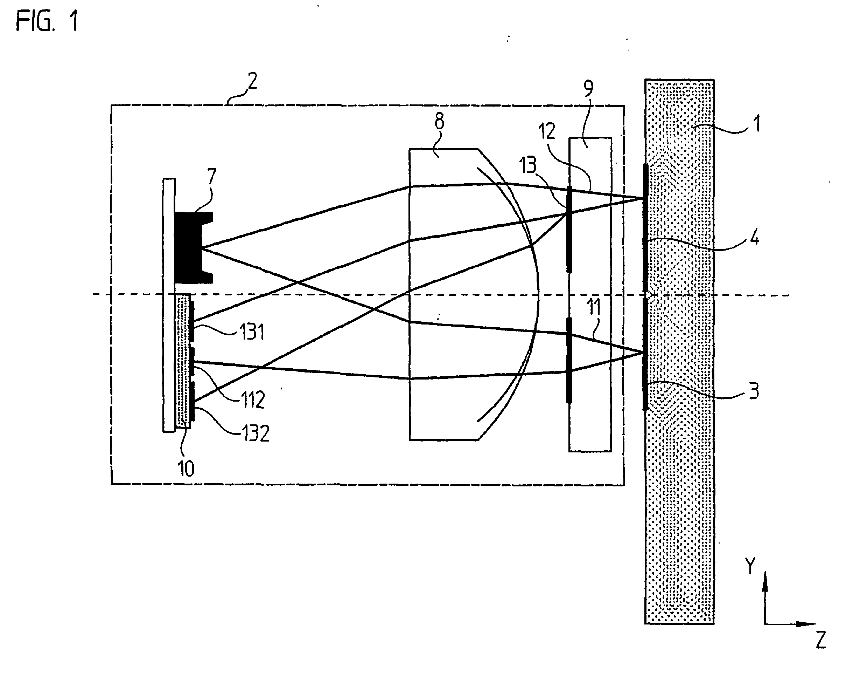

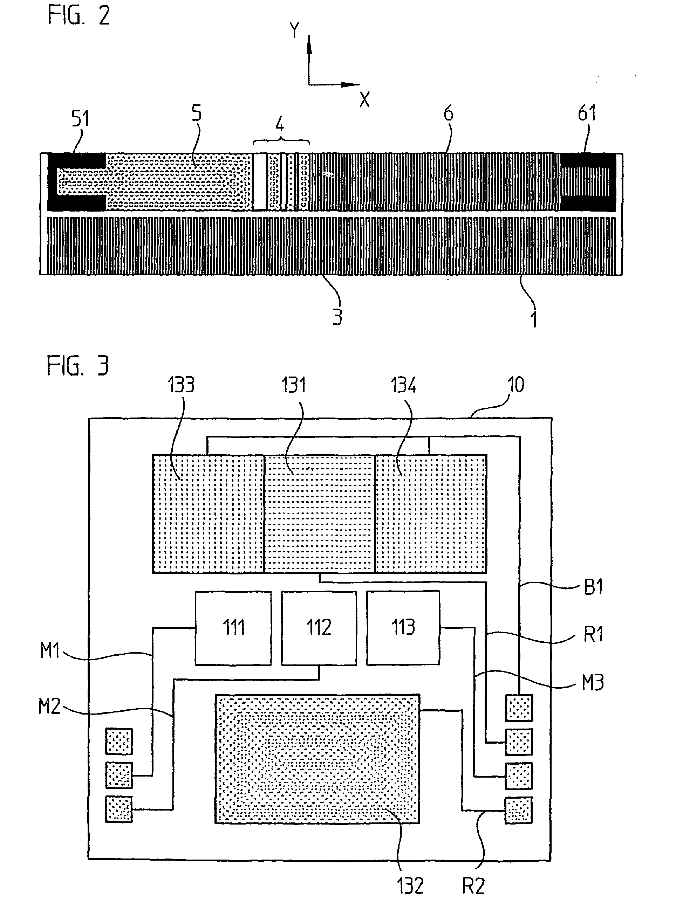

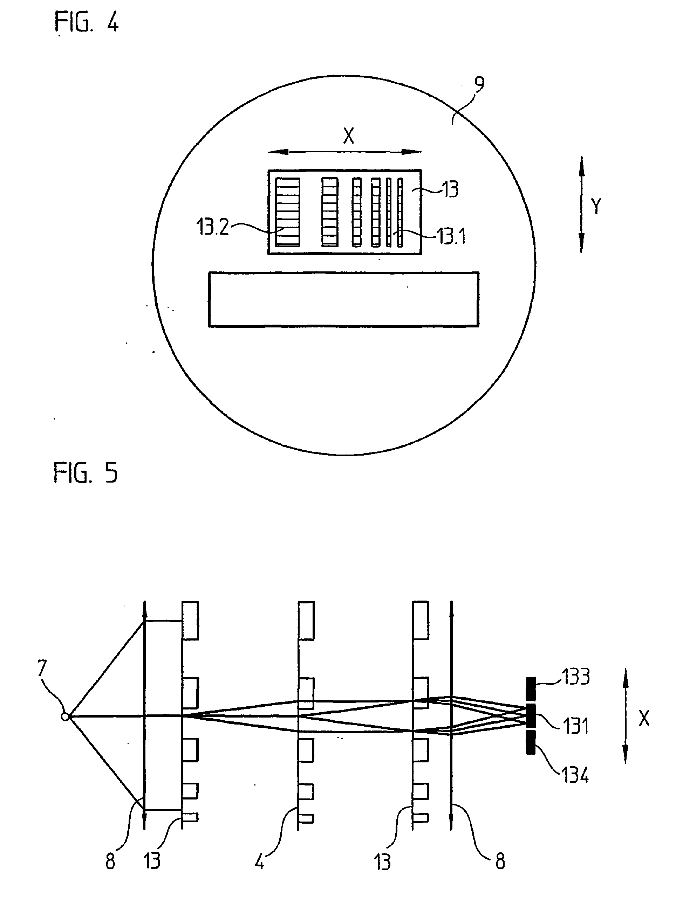

Figur 1 zeigt eine lichtelektrische inkrementale Positionsmesseinrichtung in Form einer Längenmesseinrichtung mit einem Maßstab 1, der relativ zu einer Abtasteinrichtung 2 in Messrichtung X verschiebbar ist. Auf dem Maßstab 1 ist in einer ersten Spur eine periodische inkrementale Messteilung 3 und in einer zweiten Spur eine Referenzmarkierung 4 sowie Bereichsmarkierungen 5 und 6 aufgebracht. Zur lichtelektrischen Abtastung des Maßstabs 1 umfasst die Abtasteinrichtung 2 eine Lichtquelle 7, deren Licht von einem Kollimator 8 gebündelt und durch eine Abtastplatte 9 auf den Maßstab 1 gerichtet wird. Das am Maßstab 1 auftreffende Licht wird an der Messteilung 3, der Referenzmarkierung 4 sowie den Bereichsmarkierungen 5 und 6 positionsabhängig reflektiert und trifft auf eine Fotoempfängeranordnung 10. Der Maßstab 1 ist in Figur 2 in Draufsicht dargestellt und die Fotoempfängeranordnung 10 in Figur 3. Wie das Licht an den einzelnen Bereichen 4, 5 und 6 positionsabhängig beeinflüsst wird, ist in den Figuren 5, 7 und 8 dargestellt.

Ein Abtaststrahlenbündel 11, welches auf das reflektierende Phasengitter 3 trifft, wird positionsabhängig moduliert, indem es in verschiedene Teilstrahlenbündel gebeugt wird, die anschließend miteinander zur Interferenz gebracht werden und und auf die drei Fotoempfänger 111, 112, 113 treffen, welche in bekannter Weise durch ein interferentielles Abtastprinzip gegeneinander phasenverschobene analoge periodische Messsignale M1, M2, M3 erzeugen, aus welchen in bekannter Weise durch Interpolation hochauflösende Zählsignale generiert werden.

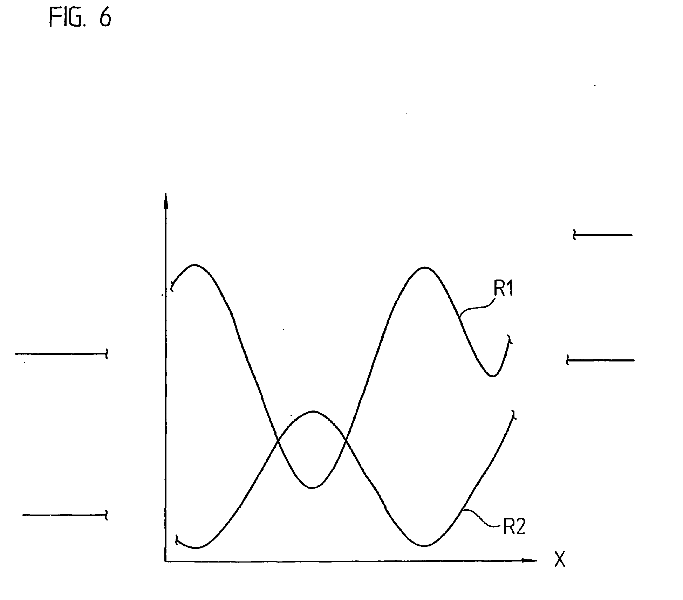

Ein Abtaststrahlenbündel 12 wird im Bereich der Referenzmarkierung 4 von den reflektierenden Feldern der Referenzmarkierung 4 zur Abtastplatte 9 gelenkt. Die Abtastplatte 9 weist in dem Bereich, an dem dieses reflektierte Licht auftrifft ein Abtastfeld 13 auf, das aus einem aperiodischen Gitter mit transparenten Feldern 13.1 und transversal ablenkenden Feldern 13.2 besteht (Figur 4). Da das Licht sowohl beim Hin- als auch beim Rückweg vom Maßstab 1 dieses Feld 13 durchtritt, kommt es zu einer transversalen Aufspaltung. Durch geeignete Wahl der Gitterparameter kann aus dem Licht, welches auf den Empfänger 131 gelangt, ein Gegentakt-Referenzmarkensignal R1 generiert werden (Figur 6). Ein anderer Teil wird in transversale erste Ordnungen abgelenkt, davon wird eine mit dem Fotoempfänger 132 detektiert, womit ein Takt-Referenzmarkensignal R2 erzeugt wird (Figur 6). Ein resultierendes Referenzmarkensignal R wird durch Überlagerung (R=R2-R1) des Takt-Referenzmarkensignals R2 mit dem Gegentakt-Referenzmarkensignal R1 generiert. Die Ausgestaltung der Abtastplatte 9 zur Abtastung der Referenzmarkierung 4 ist in Figur 4 und der Abtaststrahlengang in Figur 5 dargestellt. Dieses Abtastprinzip ist ausführlich in der EP 0 669 518 B1 erläutert, auf dessen Offenbarung ausdrücklich Bezug genommen wird.

Zur Kollimation des Abtaststrahlenbündels 12 der oberen Spur auf die Fotoempfänger 131, 132, 133, 134 dient ein erstes Segment des Kollimators 8 und zur Kollimation des Abtaststrahlenbündels 11 der unteren Spur auf die Fotoempfänger 111, 112, 113 dient ein zweites Segment des Kollimators 8. Die Segmente sind in Figur 1 nur schematisch dargestellt.

Die Referenzmarkierung 4 in Form eines aperiodischen Phasengitters erstreckt sich über mehrere Teilungsperioden der Messteilung 3. Wenn das Abtastfeld 13 der Referenzmarkierung 4 exakt gegenübersteht, generieren die Fotoempfänger 131, 132 ein, einem inkrementalen Zählimpuls eindeutig zugeordnetes Referenzmarkensignal. Dieser Zählimpuls definiert einen Wegabschnitt eindeutig, der durch die Interpolation kleiner ist als eine Teilungsperiode der Messteilung 3.

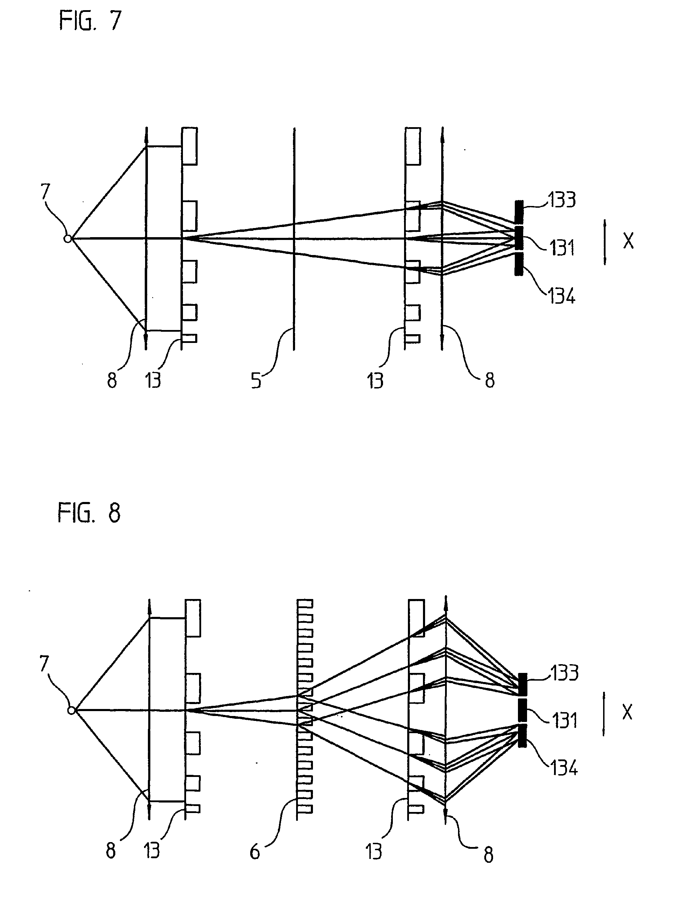

Auf der linken Seite der Referenzmarkierung 4 ist der Maßstab 1 gleichmäßig reflektierend. Befindet sich die Abtasteinrichtung 2 dieser reflektierenden Bereichsmarkierung 5 gegenüberliegend, wird das auftreffende Abtaststrahlenbündel 12 gemäß dem Abtaststrahlengang in Figur 7 auf den Fotoempfänger 131 gerichtet.

Auf der rechten Seite der Referenzmarkierung 4 ist ein Beugungsgitter 6 als Bereichsmarkierung am Maßstab 1 angeordnet. Dieses Beugungsgitter 6 ist ein Phasengitter, welches die 0. Beugungsordnung weitgehend unterdrückt und das auftreffende Abtaststrahlenbündel 12 in die ± 1. Beugungsordnungen ablenkt. Diese am Beugungsgitter 6 reflektierten und in Messrichtung X abgelenkten Beugungsordnungen werden vom Kollimator 8 auf die Fotoempfänger 133, 134 konzentriert. Dieser Abtaststrahlengang ist in Figur 8 dargestellt.

Licht wird also an den Bereichsmarkierungen 5, 6 abhängig von der Maßstabsposition in seiner Richtung abgelenkt. Besonders geeignet für die Richtungsablenkung sind Gitter mit ihren Eigenschaften der Gitterkonstante und/oder der Gitterausrichtung. Die Information der Richtungsablenkung wird in der Brennebene der Linse 8 auscodiert, da jeder Gitterkonstante und jeder Gitterrichtung ein Punkt in der Brennebene der Linse 8 zugeordnet ist, wo geeignete Photoelemente 131, 133, 134 plaziert werden können.

Die Messteilung 3, die Referenzmarkierung 4 und die Bereichsmarkierung 6 sind vorteilhafterweise Phasengitter, was den Vorteil mit sich bringt, dass diese Gitter 3, 4, 6 in gemeinsamen Verfahrensschritten hergestellt werden können und somit die korrekte Zuordnung der Gitter 3, 4, 6 zueinander gewährleistet ist. Im Beispiel hat das Phasengitter 6 die gleichen Gitterparameter wie die Messteilung 3.

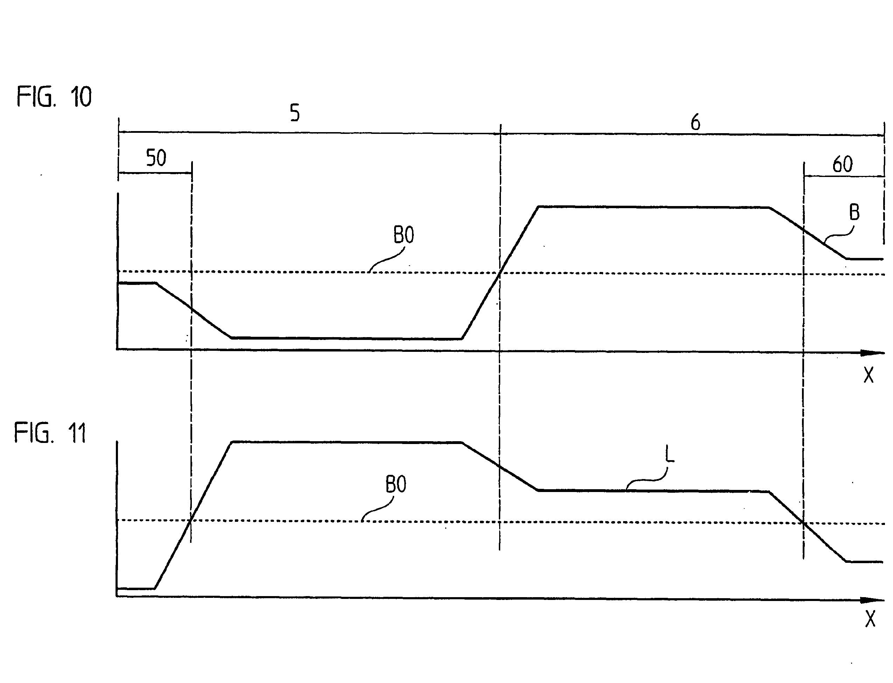

Durch die optisch unterschiedliche Ausgestaltung der rechten und linken Seite der Referenzmarkierung 4 wird das Abtaststrahlenbündel 12 entweder in eine Richtung reflektiert und auf den Fotoempfänger 131 gerichtet oder in eine davon abweichende Richtung reflektiert auf die Fotoempfänger 133, 134 gerichtet. In beiden Positionen steht somit ein eindeutiges Bereichssignal B (Figur 10) zur Verfügung. Im Gegensatz zum Stand der Technik steht auf beiden Seiten der Referenzmarkierung 4 ein Bereichssignal größer Null zur Verfügung, so dass auch eine Unterbrechung des Abtaststrahlenganges, beispielsweise durch Verschmutzung, erkannt werden kann.

Durch die erfindungsgemäße Maßnahme ist es möglich, die Referenzmarkierung 4 und die Bereichsmarkierungen 5, 6 in einer gemeinsamen Spur, also in Messrichtung X hintereinander anzuordnen, so dass die Bereiche 4, 5, 6 von einem gemeinsamen Lichtstrahlenbündel 12 abgetastet werden. Die Umlenkung auf den Fotoempfänger 131 oder den Fotoempfängern 133, 134 erfolgt durch die richtungsselektive Reflexionsfunktion der Bereiche 5 und 6 am Maßstab 1. Diese richtungsselektive Reflexion der Bereiche 5 und 6 kann auch in anderer Weise erfolgen, beispielsweise durch unterschiedlich geneigte reflektierende Flächen oder keilige Glasflächen bei Durchlicht-Abtastprinzip oder durch verschiedene ablenkende Gitterbereiche in Form von longitudinal (in X-Richtung) oder transversal (in Y-Richtung) ablenkende Amplituden- oder Phasengitter.

Zur Erzeugung des in Figur 10 dargestellten Bereichssignals B wird das Ausgangssignal R1 des Fotoempfängers 131 und das Ausgangssignal B1 des Fotoempfängers 133, 134 einer Differenzschaltung 20 zugeführt. Aus der Amplitude des Bereichssignals B ist eindeutig unterscheidbar, ob sich die Abtasteinrichtung 2 auf der rechten oder der linken Seite der Referenzmarkierung 4 befindet. Es ist ersichtlich, dass der gegenseitige Abstand der Pegel relativ groß ist. Durch die Differenzbildung wird das Bereichssignal B weitgehend unabhängig von der Beleuchtungsstärke.

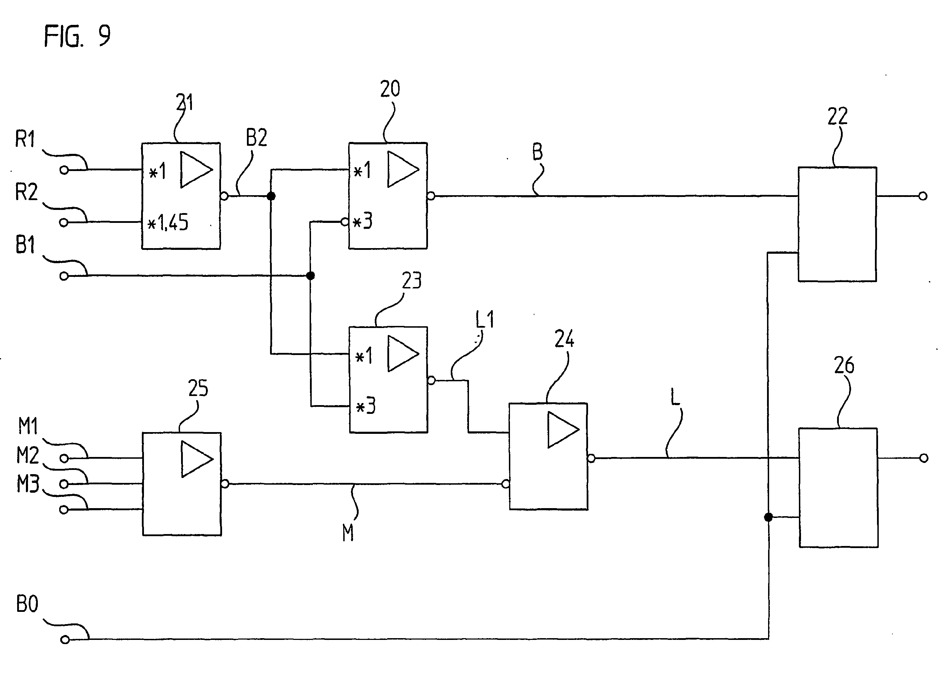

In Figur 9 ist im Detail eine besonders vorteilhafte Auswerteeinheit zur Bildung des Bereichssignals B dargestellt. Das Gegentakt-Referenzmarkensignal R1 und das Takt-Referenzmarkensignal R2 werden in einem Addierer 21 unterschiedlich gewichtet zu dem Signal B2 = R1 + 1,45. R2 aufsummiert. Dadurch wird im Bereich der Referenzmarkierung 4 eine Glättung des ansonsten relativ stark oszillierenden Bereichssignals B erreicht. Das Ausgangssignal B2 des Addierers 21 sowie das Signal B1 werden der Differenzschaltung 20 zur Bildung des Bereichssignals B = B2 - 3. B1 zugeführt. Das Bereichssignal B wird einem Vergleicher 22 zugeführt, in dem das Bereichssignal B mit einer Referenzgröße B0 verglichen wird. Ist das Bereichssignal B größer als die Referenzgröße B0, bedeutet dies, dass sich die Abtasteinrichtung 2 auf der rechten Seite der Referenzmarkierung 4 befindet. Ist das Bereichssignal B kleiner als die Referenzgröße B0, bedeutet dies, dass sich die Abtasteinrichtung 2 auf der linken Seite der Referenzmarkierung 4 befindet.

Bei dem in der Einleitung genannten Stand der Technik (DE 92 09 801 U1) sind zusätzlich zu den Bereichsmarkierungen links und rechts von der Referenzmarkierung sogenannte Steuermarken an den Enden des Maßstabs angebracht. Diese Steuermarken definieren die Extremlagen der Abtasteinrichtung und werden auch als Endlagenschalter oder Limitmarkierung bezeichnet. Positionsmesseinrichtungen mit derartigen Endlagenschaltem bzw. Limitmarkierungen sind auch in der DE 41 11 873 C2 und der EP 0145 844 B1 beschrieben.

Bei einer Positionsmesseinrichtung mit den erfindungsgemäß ausgestalteten Bereichsmarkierungen ist die Funktion von Grenzlagenschaltern besonders vorteilhaft realisierbar, indem die Bereichsmarkierungen 5, 6 in den Limitbereichen 50, 60 teilweise abgedeckt werden. Wie in Figur 2 dargestellt ist, sind hierzu Blenden 51, 61 am Maßstab 1 aufgebracht. Diese Blenden 51, 61 können in Form von verschiebbaren, den Maßstab 1 umgreifenden aus Federblech bestehenden Klammern realisiert sein, oder sie können auch auf die Oberfläche des Maßstabs 1 aufgedampft, aufgeklebt oder in Form von Filtergläsern ausgeführt sein. Die Blenden 51, 61 beeinflussen insbesondere die Ausgangssignale B1; R1 der Fotoempfänger 133, 134; 131 und somit auch den Pegel des Bereichssignals B in den Limitbereichen 50, 60. Anhand des Verlaufs des Bereichssignals B können vier verschiedene Bereiche des Maßstabs 1 unterschieden werden, nämlich linker Limitbereich 50, linker Bereich 5 von der Referenzmarkierung 4, rechter Bereich 6 von der Referenzmarkierung 4 sowie rechter Limitbereich 60. Da die unterschiedliche Ablenkung des Abtaststrahlenbündels 12 in den Limitbereichen 50, 60 erhalten bleibt, ist auch in den Limitbereichen 50, 60 die Richtungsinformation - rechte Seite bzw. linke Seite von der Referenzmarkierung 4- enthalten.

In Figur 9 ist eine besonders vorteilhafte Schaltungsanordnung dargestellt, mit der ein Limitsignal L erzeugbar ist, wie es in Figur 11 dargestellt ist. Das damit erzeugte Limitsignal L weist eine relativ hohe Pegeldifferenz zwischen den Limitbereichen 50, 60 und dem übrigen Bereich auf. Der Störabstand ist somit relativ groß.

Zur Erzeugung des Limitsignals L weist die Schaltungsanordnung einen Addierer 21 auf, der das Gegentakt-Referenzmarkensignal R1 und das Takt-Referenzmarkensignal R2 unterschiedlich gewichtet zu dem Signal B2 = R1 + 1,45. R2 aufsummiert. Das Ausgangssignal B2 des Addierers 21 sowie das Signal B1 werden einem weiteren Addierer 23 zur Bildung des Signals L1 = B2 + 3. B1 zugeführt. Das Signal L1 wird einer Differenzschaltung 24 zur Bildung des Limitsignals L = L1 - M zugeführt, wobei M die Summe der in einem Addierer 25 aufsummierten Messsignale M1, M2, M3 der Messteilung 3 ist. Das Limitsignal L wird einem Vergleicher 26 zugeführt, in dem das Limitsignal L mit einer Referenzgröße B0 verglichen wird. Ist das Limitsignal L größer als die Referenzgröße B0, bedeutet dies, dass sich die Abtasteinrichtung 2 im zulässigen Bereich befindet. Ist das Limitsignal L kleiner als die Referenzgröße B0, bedeutet dies, dass sich die Abtasteinrichtung 2 in einem der Limitbereich 50 oder 60 befindet. Ob sich die Abtasteinrichtung 2 im rechten oder im linken Limitbereich befindet wird anhand des Bereichssignals B erkannt.

Durch die optische Beeinflussung der Bereichsmarkierungen 5, 6 in den Limitbereichen 50, 60 bleibt die richtungsselektive Ablenkung auf die Fotoempfänger 131 bzw. 133, 134 erhalten, so dass keine zusätzlichen Fotoempfänger zur Abtastung der Limitbereiche 50, 60 erforderlich sind. Weiterhin ist eine platzsparende Anordnung der Bereichsmarkierungen 5, 6 und der Limitbereiche gewährleistet. Vorteilhaft ist, wenn die Abtastsignale R1, B1 zur Bildung des Bereichssignals B in einer Schaltungsanordnung nach einer ersten Verknüpfungsregel und zur Bildung des Limitsignals L nach einer zweiten davon abweichenden Verknüpfungsregel kombiniert werden, wobei die erste Verknüpfungsregel eine Differenzbildung der Abtastsignale (R1-B1) und die zweite Verknüpfungsregel eine Addition (R1+B1) enthält. Bei einer Verschmutzung des Maßstabes 1 bzw. Unterbrechung des Abtaststrahlenganges sinkt das Limitsignal L unter die Referenzgröße B0. Bei einem Fehler wird in diesem Beispiel die gleiche Information erzeugt, wie bei Erreichen eines Limitbereichs.

Alternativ können die Limitmarkierungen auch gebildet werden, indem die Intensität der Beugungsordnungen variiert wird, dazu dienen die Gitterparameter Strich-Lücken-Verhältnis und bei Phasengitter die Phasentiefe. Bei dieser Alternative bleibt die Richtung des abgelenkten Lichtes und somit die Bereichsinformation ebenfalls erhalten.

Die Limitmarkierungen können auch durch weitere ablenkende Bereiche gebildet sein, die sich von den Bereichsmarkierungen 5, 6 derart unterscheiden, dass sie das auftreffende Licht in eine andere Richtung auf weitere Fotoempfänger lenken. Insbesondere sind dann die Limitmarkierungen Gitter mit anderen Gitterparametern (Teilungsperiode und/oder Gitterrichtung) als die Gitter der Bereichsmarkierungen 5, 6. Werden die ersten Beugungsordnungen detektiert, dann stehen den Limitbereichen unterschiedliche Orte in der Brennebene der Linse und damit unterschiedliche Fotoelemente zur Verfügung.

Anhand des dargestellten Beispiels ist der Maßstab 2 reflektierend ausgebildet. In nicht dargestellter Weise kann der Maßstab auch transparent ausgeführt sein, so dass die Gitter 3 und 6 als transparente Beugungsgitter ausgebildet sind. Die Erfindung ist also bei Auflicht- sowie bei Durchlicht-Abtastung realisierbar.

Die unterschiedlichen Fotoempfänger 131, 133, 134 sind diskrete Einzelelemente oder Elemente eines Arrays.

Die Bereichsmarkierungen zur Unterscheidung mehrerer Messbereiche entlang des Maßstabs sind in dem oben dargestellten vorteilhaften Beispiel Gitter mit unterschiedlichen Gitterparametern, wobei sich die Gitterparameter von einem Messbereich zum anderen Messbereich sprunghaft ändern. Alternativ dazu können sich die Gitterparameter auch kontinuierlich ändern, um eine größere Anzahl von Messbereichen voneinander unterscheidbar auszugestalten.

Eine weitere Anwendung von Bereichsmarkierungen ist das Markieren des Umfeldes beidseits der Referenzmarke. In Bereichen beidseits der Referenzmarke kann somit ein Bereichssignal erzeugt werden, das bei der Positionsmessung auf die kommende Referenzmarkierung hinweist und daraufhin kann gegebenenfalls die Verfahrgeschwindigkeit reduziert werden.

Zusammenfassend besteht die Erfindung also darin, eine Positionsmesseinrichtung mit einem Maßstab und einer relativ dazu in Messrichtung beweglichen Abtasteinrichtung anzugeben, wobei
- der Maßstab eine Messteilung aufweist und durch Abtastung der Messteilung periodische Messsignale erzeugbar sind,
- der Maßstab zumindest eine Referenzmarkierung aufweist und durch Abtastung der Referenzmarkierung ein Referenzmarkensignal erzeugbar ist,
- der Maßstab optisch abtastbare Bereichsmarkierungen aufweist und durch lichtelektrische Abtastung der Bereichsmarkierungen mit einem Abtaststrahlenbündel ein Bereichssignal erzeugbar ist, durch dessen Charakteristik mehrere Messbereiche neben der Referenzmarke unterscheidbar sind, und
- die Bereichsmarkierungen optisch unterschiedlich ablenkende Elemente sind, welche das auftreffende Abtaststrahlenbündel in den mehreren Messbereichen auf unterschiedliche Fotoempfänger ablenkt.

## Patentansprüche

1. Positionsmesseinrichtung mit einem Maßstab (1) und einer relativ dazu in Messrichtung (X) beweglichen Abtasteinrichtung (2), wobei
- der Maßstab (1) eine Messteilung (3) aufweist und durch Abtastung der Messteilung (3) periodische Messsignale (M1, M2, M3) erzeugbar sind,
- der Maßstab (1) zumindest eine Referenzmarkierung (4) aufweist und durch Abtastung der Referenzmarkierung (4) ein Referenzmarkensignal (R1, R2) erzeugbar ist,
- der Maßstab (1) optisch abtastbare Bereichsmarkierungen (5, 6) aufweist und durch lichtelektrische Abtastung der Bereichsmarkierungen (5, 6) mit einem Abtaststrahlenbündel (12) ein Bereichssignal (B) erzeugbar ist, durch dessen Charakteristik mehrere Messbereiche (5, 6, 50, 60) neben der Referenzmarke (4) unterscheidbar sind, **dadurch gekennzeichnet, dass**
- die Bereichsmarkierungen optisch unterschiedlich ablenkende Elemente (5, 6) sind, welche das auftreffende Abtaststrahlenbündel (12) in den mehreren Messbereichen (5, 6, 50, 60) auf unterschiedliche Fotoempfänger (131, 133, 134) ablenkt.

2. Positionsmesseinrichtung nach Anspruch 1, **dadurch gekennzeichnet, dass** die optisch ablenkenden Elemente Gitter (5, 6) mit unterschiedlichen Gitterparametern sind.

3. Positionsmesseinrichtung nach Anspruch 2, **dadurch gekennzeichnet, dass** die Messteilung (3), die Referenzmarkierung (4) und die Bereichsmarkierungen (5, 6) Phasengitter sind.

4. Positionsmesseinrichtung nach einem der vorhergehenden Ansprüche, **dadurch gekennzeichnet, dass** die Bereichsmarkierungen (5, 6) und die Referenzmarkierung (4) in einer gemeinsamen Spur angeordnet sind.

5. Positionsmesseinrichtung nach einem der vorhergehenden Ansprüche, **dadurch gekennzeichnet, dass** die unterschiedlichen Fotoempfänger (131, 133, 134) derart angeordnet sind, dass ein auf die Referenzmarkierung (4) auftreffendes Abtaststrahlenbündel (12) ebenfalls auf zumindest einen dieser Fotoempfänger (131; 133, 134) gerichtet ist.

6. Positionsmesseinrichtung nach einem der vorhergehenden Ansprüche, **dadurch gekennzeichnet, dass** durch das Bereichssignal (B) unterscheidbar ist, ob sich die Abtasteinrichtung (2) auf der ersten oder der zweiten Seite der Referenzmarkierung (4) befindet, indem die Bereichsmarkierung (5) auf der ersten Seite der Referenzmarkierung (4) derart ausgebildet ist, dass das auftreffende Abtaststrahlenbündel (12) auf einen ersten Fotoempfänger (131) trifft und die Bereichsmarkierung (6) auf der zweiten Seite der Referenzmarkierung (4) derart ausgebildet ist, dass das auftreffende Abtaststrahlenbündel (12) auf zumindest einen zweiten Fotoempfänger (133, 134) trifft.

7. Positionsmesseinrichtung nach Anspruch 6, **dadurch gekennzeichnet, dass** die Bereichsmarkierung (5) auf der ersten Seite der Referenzmarkierung (4) reflektierend oder transparent ausgebildet ist und die Bereichsmarkierung (6) auf der zweiten Seite der Referenzmarkierung (4) als Beugungsgitter ausgebildet ist.

8. Positionsmesseinrichtung nach einem der Ansprüche 6 oder 7, **dadurch gekennzeichnet, dass** der Maßstab (1) Limitbereiche (50, 60) aufweist, wobei die Limitbereiche (50, 60) durch partielles Verändern der optischen Wirkung der Bereichsmarkierungen (5, 6) gebildet sind.

9. Positionsmesseinrichtung nach Anspruch 8, **dadurch gekennzeichnet, dass** die Limitbereiche (50, 60) durch partielles Abdecken der Bereichsmarkierungen (5, 6) gebildet sind.

10. Positionsmesseinrichtung nach Anspruch 9, **dadurch gekennzeichnet, dass** zur Bildung der Limitbereiche (50, 60) jeweils eine Blende (51, 61) auf den Bereichsmarkierungen (5, 6) aufgebracht ist.

11. Positionsmesseinrichtung nach einem der vorhergehenden Ansprüche 6 bis 10, **dadurch gekennzeichnet, dass** durch lichtelektrische Abtastung der Referenzmarkierung (4) zumindest ein Referenzmarkensignal (R1, R2) erzeugbar ist, durch lichtelektrische Abtastung der Bereichsmarkierungen (5, 6) jeweils vom ersten Fotoempfänger (131) und vom zumindest zweiten Fotoempfänger (133, 134) ein zweites Abtastsignal (B1) erzeugbar ist, wobei zur Bildung eines Bereichssignals (B) diese Signale (R1, B1) in einer Auswerteeinheit nach einer ersten Verknüpfungsregel kombiniert sind und zur Bildung eines Limitsignals (L) nach einer zweiten davon abweichenden Verknüpfungsregel kombiniert sind.

## Claims

1. A position measuring device comprising a measuring unit (1) and a scanner (2), which can be moved relative thereto in measuring direction (X), wherein
- the measuring unit (1) encompasses a measuring scale (3) and periodic measuring signals (M1, M2, M3) can be generated by scanning the measuring scale (3),
- the measuring unit (1) encompasses at least one reference mark (4) and a reference mark signal (R1, R2) can be generated by scanning the reference mark (4),
- the measuring unit (1) encompasses area marks (5, 6), which can be scanned optically, and that an area signal (B) can be generated by photoelectric scanning of the area marks (5, 6) by means of a scanning beam bundle (12), by means of the characteristic of which a plurality of measuring areas (5, 6, 50, 60) can be distinguished next to the reference mark (4), **characterized in that**
- the area marks are elements (5, 6) which optically deflect differently, which the impinging scanning beam bundle (12) deflects to different photoreceivers (131, 133, 134) in the plurality of the measuring areas (5, 6, 50, 60).

2. The position measuring device according to claim 1, **characterized in that** the optically deflecting elements are gratings (5, 6) comprising different grating parameters.

3. The position measuring device according to claim 2, **characterized in that** the measuring scale (3), the reference mark (4) and the area marks (5, 6) are phase gratings.

4. The position measuring device according to one of the preceding claims, **characterized in that** the area marks (5, 6) and the reference mark (4) are arranged in a common track.

5. The position measuring device according to one of the preceding claims, **characterized in that** the different photoreceivers (131, 133, 134) are arranged such that a scanning beam bundle (12), which impinges on the reference mark (4), is also directed to at least one of these photoreceivers (131; 133, 134).

6. The position measuring device according to one of the preceding claims, **characterized in that** a differentiation can be made by means of the area signal (B), whether the scanner (2) is located on the first or the second side of the reference mark (4), **in that** the area mark (5) on the first side of the reference mark (4) is embodied such that the impinging scanning beam bundle (12) impinges on a first photoreceiver (131) and the area mark (6) on the second side of the reference mark (4) is embodied such that the impinging scanning beam bundle (12) impinges on at least a second photoreceiver (133, 134).

7. The position measuring device according to claim 6, **characterized in that** the area mark (5) on the first side of the reference mark (4) is embodied to be reflective or transparent and that the area mark (6) on the second side of the reference mark (4) is embodied as an optical diffraction grating.

8. The position measuring device according to one of claims 6 or 7, **characterized in that** the measuring unit (1) encompasses limit areas (50, 60), wherein the limit areas (50, 60) are formed by partially changing the optical effect of the area marks (5, 6).

9. The position measuring device according to claim 8, **characterized in that** the limit areas (50, 60) are formed by partially covering the area marks (5, 6).

10. The position measuring device according to claim 9, **characterized in that** a screen (51, 61) is in each case applied to the area marks (5, 6) for forming the limit areas (50, 60).

11. The position measuring device according to one of the preceding claims 6 to 10, **characterized in that** at least one reference mark signal (R1, R2) can be generated by means of photoelectric scanning of the reference mark (4), a second scanning signal (B1) can be generated by means of photoelectric scanning of the area marks (5, 6) in each case by the first photoreceiver (131) and by the at least second photoreceiver (133, 134), wherein, for forming an area signal (B), these signals (R1, B1) are combined in an evaluation unit according to a first linking rule and, for forming a limit signals (L), are combined according to a second linking rule, which deviates therefrom.

## Revendications

1. Dispositif de mesure de position avec une échelle graduée (1) et un dispositif de balayage (2) mobile par rapport à la direction (X), dans lequel
- l'échelle graduée (1) comporte une graduation (3) et des signaux de mesure périodiques (M1, M2, M3) peuvent être produits par balayage de la graduation (3),
- l'échelle graduée (1) comporte au moins une marque de référence (4) et un signal de marque de référence (R1, R2) peut être produit par balayage de la marque de référence (4),
- l'échelle graduée (1) comporte des marques de zone (5, 6) susceptibles d'être balayées optiquement, et le balayage photo-électrique des marques de zone (5, 6) avec un faisceau de balayage (12) permet de produire un signal de zone (B), par la caractéristique duquel plusieurs zones de mesure (5, 6, 50, 60) peuvent être distinguées en plus de la marque de référence (4), **caractérisé en ce que**
- les marques de zone sont des éléments (5, 6) à déviations optiques variables, faisant dévier le faisceau de balayage (12) incident sur différents photorécepteurs (131, 133, 134) dans les plusieurs zones de mesure (5, 6, 50, 60).

2. Dispositif de mesure de position selon la revendication 1, **caractérisé en ce que** les éléments à déviation optique sont des grilles (5, 6) avec différents paramètres de grille.

3. Dispositif de mesure de position selon la revendication 2, **caractérisé en ce que** la graduation (3), la marque de référence (4) et les marques de zone (5, 6) sont des grilles de phase.

4. Dispositif de mesure de position selon l'une des revendications précédentes, **caractérisé en ce que** les marques de zone (5, 6) et la marque de référence (4) se trouvent sur une piste commune.

5. Dispositif de mesure de position selon l'une des revendications précédentes, **caractérisé en ce que** les différents photorécepteurs (131, 133, 134) sont disposés de telle manière qu'un faisceau de balayage (12) incident sur la marque de référence (4) est également orienté vers au moins l'un de ces photorécepteurs (131 ; 133, 134).

6. Dispositif de mesure de position selon l'une des revendications précédentes, **caractérisé en ce que** le signal de zone (B) permet de distinguer si le dispositif de balayage (2) se trouve sur le premier ou sur le deuxième côté de la marque de référence (4), du fait que la marque de zone (5) est conçue de telle manière sur le premier côté de la marque de référence (4), que le faisceau de balayage (12) incident atteint un premier photorécepteur (131), et la marque de zone (6) sur le deuxième côté de la marque de référence (4) est conçu de telle manière que le faisceau de balayage (12) incident atteint au moins un deuxième photorécepteur (133, 134).

7. Dispositif de mesure de position selon la revendication 6, **caractérisé en ce que** la marque de zone (5) sur le premier côté de la marque de référence (4) est conçue réfléchissante ou transparente, et la marque de zone (6) sur le deuxième côté de la marque de référence (4) est conçue comme une grille de diffraction.

8. Dispositif de mesure de position selon l'une des revendications 6 ou 7, **caractérisé en ce que** l'échelle graduée (1) comporte des zones limites (50, 60), les zones limites (50, 60) étant formées par une modification partielle de l'effet optique des marques de zone (5, 6).

9. Dispositif de mesure de position selon la revendication 8, **caractérisé en ce que** les zones limites (50, 60) sont formées par recouvrement partiel des marques de zone (5, 6).

10. Dispositif de mesure de position selon la revendication 9, **caractérisé en ce que** pour la formation des zones limites (50, 60), un cache (51, 61) est appliqué respectivement sur les marques de zone (5, 6).

11. Dispositif de mesure de position selon l'une des revendications précédentes 6 à 10, **caractérisé en ce que** le balayage photo-électrique de la marque de référence (4) permet de produire au moins un signal de marque de référence (R1, R2), le balayage photo-électrique des marques de zone (5, 6) permet de produire un deuxième signal de balayage (B1) respectivement par le biais du premier photorécepteur (131) et de l'au moins deuxième photorécepteur (133, 134), où ces signaux (R1, B1) sont combinés dans une unité d'évaluation selon une première règle de combinaison logique pour la formation d'un signal de zone (B), et sont combinés selon une deuxième règle de combinaison logique différente pour la formation d'un signal de limite (L).
